# EUROPEAN PATENT APPLICATION

(11) **EP 2 011 609 A2**
(43) Date of publication of application: **07.01.2009**
(21) Application number: 08104621.1
(22) Date of filing: 03.07.2008
(51) Int. Cl.: B25J 5/02, B25J 9/00

(54) **Robotic system for laser, plasma, water jet, milling etc. machining or processing of parts**

(30) Priority: 05.07.2007 TR 200704706
(71) Applicant: Teknodrom Robotik ve otomasyon sanayi ve ticaret Limited sirketi, 41480 Kocaeli (TC)
(72) Inventor: Gok, Gokhan Vargin Teknodrom Robotik ve otomasyon sanayi ve ticaret, 41480, Kocaeli (TR)
(74) Representative: Iskender, Ibrahim

(57) **Abstract**

Robotic system for laser, plasma, water jet, milling etc. machining or processing of parts wherein
a processing robot (R1) which
- is movable between 3 to 13 axes,
- is slidable on a servo motor moving mechanism (S) and
- which is connected at his tip with
an operation tool (L) is used to process a work piece (10 in Fig. 7-11), the system further comprises
at least two transferring and positioning robots (R2,R3,R4,R5,R6,R7,R8,R9)
each of which
- is moveable between 3 to 13 axes,
- comprises a holder (V in Fig. 4)
that can coordinate the position of the work pieces for suitable positoning
in view of their processing by the processing robot (R1).
The transferring and positioning robots can take take a processing tool (T in Fig. 4) from a tool magazine (M).

## Description

### TECHNICAL FIELD

This invention not classical fixture application is related about flexible robotic system which is drilling, canalizing, processing, etc. by using robots that can work together as synchronized or positioning individually programmed according to different work part's reference point .

### PREVIOUS TECHNIQUE

Classical laser, plasma, water jet, milling machine etc. systems work at X and Y coordinate planes. Recently, five axis working laser, plasma, water jet, milling machine etc. systems have been produced. Besides, robotic processing application has been used mostly. But those systems are not flexible fixture for parts setting. Parts positions have to be re coordinated for processing each new part. But fixed coordinated fixture has to be produced to make processing easier which can be setting to workbench. And productions of new fixture for each new part are imperative. But that could be reason of losing money and time. Programming of the work bench at the classical processing system can take long time.

For example, 120 unfixed or installed fixtures have to be storage at factory in order to process 120 parts by using classical laser, plasma, water jet, milling machine etc. systems. That will be too much cost for user. Moreover, those fixtures have to be settled to the system and positions have to be re coordinated to workbench when each work part is changed.

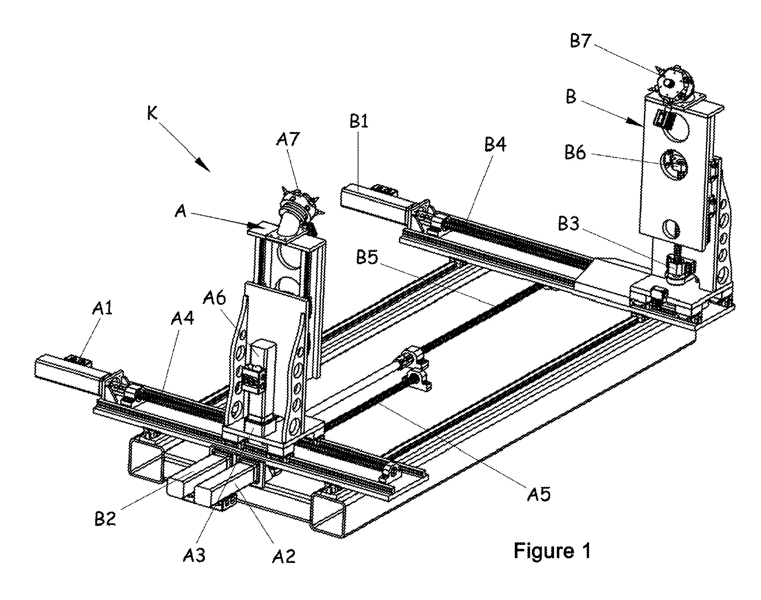

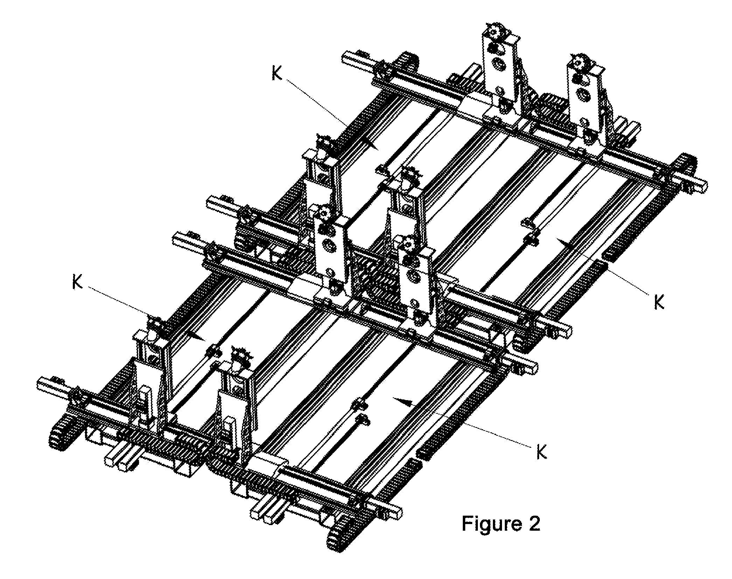

Explanation of the Cartesian coordinate systems working principle that is first solution study of the making classical coordinate positioning method which remarked FIG1 and FIG2 is like below;

System is divided two letter codes A and B. And both sides work at same method, so it will be enough to explain only one side. After pin magazine that encoded as B7 at FIG.1 chose the pin according to the parts that will be coordinated, B1 servo motor moves B4 screw pin on Y direction, B2 servo motor moves B5 screw pin to X direction, B3 servo motor moves B6 screw pin to Z direction. With these moves work part supplies the place of flexible system which is in referencing hole coordinates axis.

Cartesian cells (K) carry A and B systems that can be seen at (FIG.1). Complicated Cartesian system is created by four of Cartesian cells combination and each Cartesian cell (K) is settled as working synchronized.

Cartesian system is more flexible than classical parts fixing method for the processing of work parts. Because different fixtures have to be produced for each different part at classical parts fixing system, each fixture has to be connected to work-bench and positions have to be defined to the work bench (set up time). It will take a long time and costs. Besides of that, each fixtures product, setting, measurement etc. cause extra costs. Cartesian system can over helm all of those disadvantages. The reason is Cartesian coordinate system moves just "X, Y, Z" axis. Moreover, Cartesian system does not need a large area for configuration.

### PURPOSE OF INVENTION

Purpose of the invention is improving of fixing system that has high action capacity, flexibility, and short part's preparing time (set up) at narrow space without using classical fixture applications.

This system works by using programmed robots that have 3 to 6 axis, can be worked together as synchronized or individually to processing, drilling, canalizing etc. at the application of laser, plasma, water jet, milling machine etc. applications. And also, each different part can be adapted those robots for definition of positions.

After, all different work parts are defined to the program once; processing adjustment is made automatically when the work parts change. This system is named as servo fixture. Servo fixture system is subsystem of the laser, plasma, water jet, milling machine etc. system and can be used for different purposes. It was improved by unrivalled R&D studies.

Another purpose of this system is decreasing of the cost and wasted time because of designing fixture for each different part.

For example, 120 unfixed or installed fixtures have to be storage in order to process 120 parts at factory by using classical laser, plasma, water jet, milling machine etc. systems. Those are too much cost for user. Moreover, those fixtures have to be adjusted and settled to the system. Robot fixture that is in issue of invention, has never used in any previous applications.
- Movable special cabin is designed and it has an automatic windows and door to make operation easier.
- Slider is improved (servo motors moving mechanism). This slider will carry robots and has maximum 0, 1 mm repeatability.
- Robot + laser, plasma, water jet, milling machine etc. gun combination is used.

Invented system has a filter mechanism can filter destructive gas that released during the processing.

At below, there are some problems occurred at available laser, plasma, water jet, milling machine etc. processing systems and counter measures are improved at this system.

**PROBLEM:** It's difficult to load or unload of parts that can have maximum 2*4 meter dimensions.

**COUNTERMEASURE:** Improved cabin make loading easier by using automatic door and windows.

**PROBLEM:** Slider (servo motors moving mechanism) will carry 1, 5-2 ton console and robot. Although heavy load, maximum 0.1 mm tender repeatable is needed.

**COUNTERMEASURE:** Planetary reduction gear which will use in front of servo motor decreases drive mistake quantity which is in minor amounts. Pinion drive gear is front tensile and its stoned profile is made. Slider, main construction's bending and stretching is calculated with finite element method by subjecting it to rigidity analyzes in CAD environment. Then ratio of mistake is determined and mistakes are optimized.

**PROBLEM:** Difficulties of the servo fixture programming. It is too difficult and complex to programming of the 54 axis system.

**COUNTERMEASURE:** It will be enough to insert the cad data or reference position of the processing parts to the improved user surface. Servo fixture control system makes all programs automatically. So, operator will not loss time with programming fixtures.

**PROBLEM:** Servo fixture precision is very important. It is very hard to get 0.1 mm precision at system included 54 different axis moving capacity.

**COUNTERMEASURE:** Elements that have not blank, are determined in fixture which is developed with robot technology. Then net mistake compensation is enabled with closed control structure of servo motor. Furthermore, analyses which are made with finite element method in CAD environment, is beneficial for supplying rigidity criteria.

**PROBLEM:** This system is too expensive but so functional, therefore it achieves all goal. So, robots move range and system cycle time etc. Points have to get defined target.

**COUNTERMEASURE:** All analysis has been done by using real time simulation program before system was installed. Moreover, after system is installed, those simulations are used to offline programming for getting extra time.

### DESCRIPTIONS OF FIGURES

- FIG 1:: It's perspective view of the Cartesian cell which is obtained while flexible fixture structure is developing.
- FIG2:: General perspective view of the general system that include combined Cartesian cells.
- FIG3:: Perspective view of the invented robotic laser, plasma, water jet, milling machine etc. part processing system.
- FIG4:: Perspective view of tool magazine that is used by transferring and positioning robots.
- FIG5:: Perspective view of the invented robotic laser, plasma, water jet, milling machine etc. part processing system.
- FIG6:: Perspective view of the tool magazine
- FIG7:: Perspective view of the example work part that was processed by invented robotic laser, plasma, water jet, milling machine etc. part processing system.
- FIG8:: Perspective view of the example work part that was processed by invented robotic laser, plasma, water jet, milling machine etc. part processing system.
- FIG9:: Perspective view of the example work part that was processed by invented robotic laser, plasma, water jet, milling machine etc. part processing system.
- FIG10:: Perspective view of the example work part that was processed by invented robotic laser, plasma, water jet, milling machine etc. part processing system.
- FIG11:: Perspective view of the example work part that was processed by invented robotic laser, plasma, water jet, milling machine etc. part processing system.

### REFERENCE NUMBERS

- 1.: Robotic laser, plasma, water jet, milling machine etc. part processing system
- 2.: Cabin
- 3.: Front left door
- 4.: Front right door
- 5.: Control panel
- 6.: Investigation monitor
- 7.: Camera
- 8.: Operator
- 9.: Gas Outlet Pipe
- 10.: Work Part
- L.: Processing Tool
- R1.: Processing Robot
- R2.: Transferring and Positioning Robot
- R3.: Transferring and Positioning Robot
- R4.: Transferring and Positioning Robot
- R5.: Transferring and Positioning Robot
- R6.: Transferring and Positioning Robot
- R7.: Transferring and Positioning Robot
- R8.: Transferring and Positioning Robot
- R9.: Transferring and Positioning Robot
- M.: Tool Magazine
- M1.: Tool Socket
- T.: Operation Tool
- S.: Moving Mechanism (Slider)
- G.: Gripper
- V.: Holder
- P.: Connection Component

### DETAILED DESCRIPTION OF INVENTION

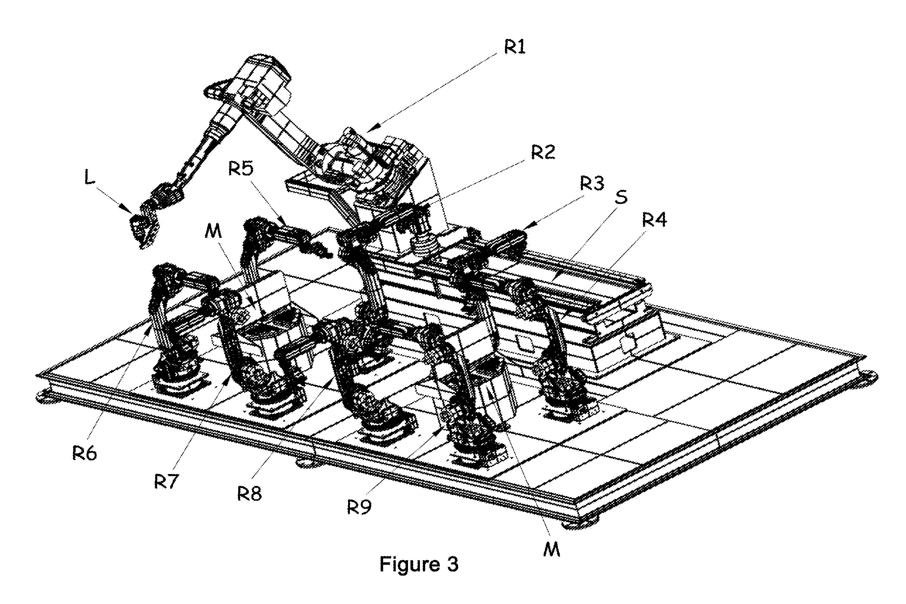

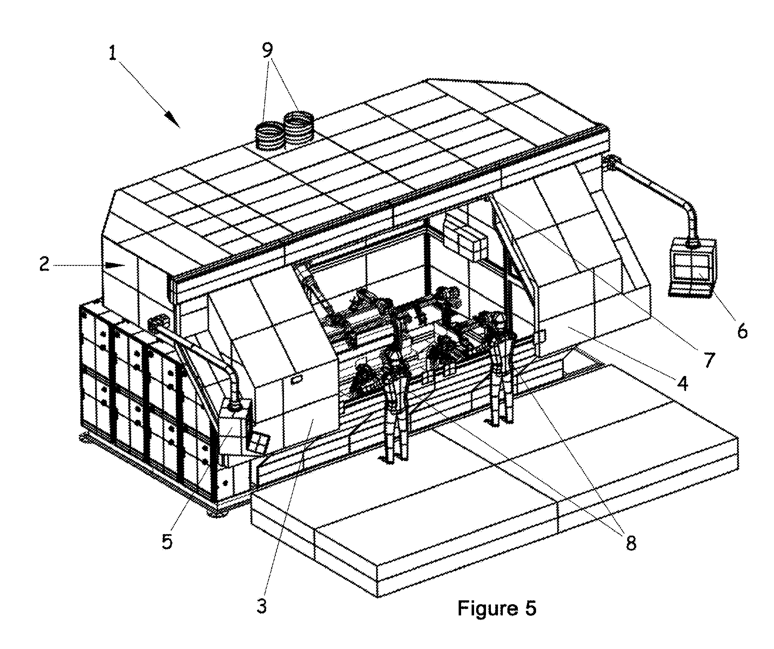

Fig 5 is the perspective view of the robotic laser, plasma, water jet, milling machine etc. system (1). Principle working of the robotic laser, plasma, water jet, milling machine etc. system is (Fig 3);

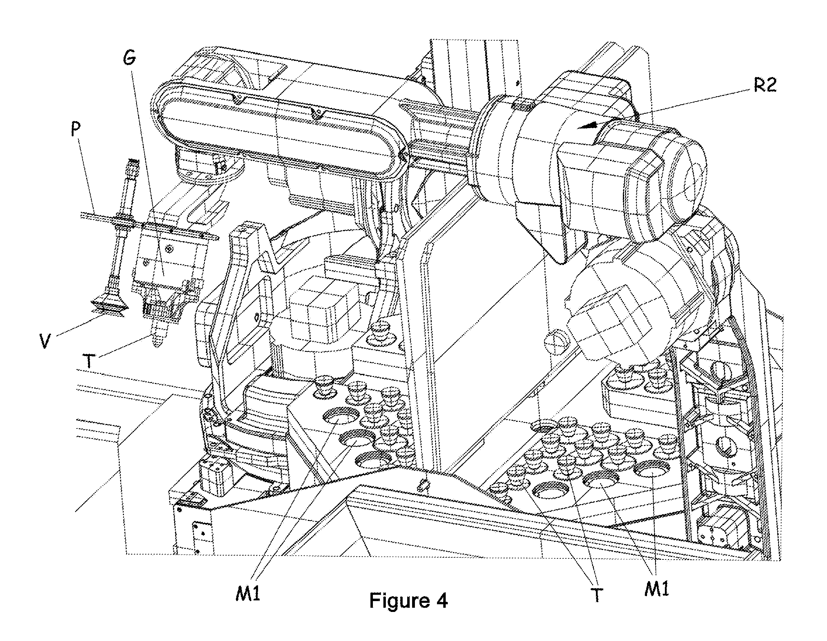

6 axis transferring and positioning robots (R2,R3,R4,R5,R6,R7,R8,R9) is designed to the parts transferring and positioning to the system. As per Fig 4, there is a holder (V), like sucker, on each robots ((R2, R3, R4, R5, R6, R7, R8, R9) sixth axis that is used for positioning and holding parts. In addition that it contains a gripper (G) is used for holding operation tool (T) which was produced variously according to each work parts (10). Gripper (G) and Holder (V) was stabilized above the connecting component. Each robot (R2, R3, R4, R5, R6, R7, R8, and R9) takes Operation Tool (T) from tool magazine (M) by using gripper (G) according to chose program from control panel and transfers to loading position in accordance with program that was prepared for processing part. Operator (8) starts system after work part (10) was loaded. First of all front right-left doors (3, 4) is closed automatically. As per Fig 5, while front door is being closed transfer and positioning robots (R2, R3, R4, R5, R6, R7, R8, R9) move from loading position to processing position in the system (1). Processing robot (R1) moves start position on the servo motor moving mechanism (S).Torch, Punta gun, laser, plasma, water jet, milling etc. Gun processing tool (L) was attached to the processing robot (R1) 6th axis.

Processing robot (R1) moves to start point and begin processing according to program that was made referenced cad data. Processing robot (R1) processes work part (1) by makes processing tool (L) moves according to program that was made before. Robots (R2, R3, R4, R5, R6, R7, R8, and R9) can not only programmed manual but also programmed offline that means making simulation at computer. Programs, were prepared at computer, can be loaded to the robots by memory cards and that gets another advantage for system.

During the processing of the work part (1), destructive gas, ray, parts piece can be occurred that can be damage human health. So, all system has to be work in a closed cabin to protecting operator and make environment safety (Fig 5). But there is a moveable camera controlled form investigation monitor's control panel is used for observing system during processing. Processing can be watched at investigation monitor LCD screen. There is a gas outlet pipe on cabin upper side where destructive gas can be evacuated. After work part is processed at system, front left-right door will open and operator can take processed part out.

Each transfer and positioning robots (R2, R3, R4, R5, R6, R7, R8, and R9) can move individually, and also work as synchronized like R3, R4, R8, R9 and R2, R5, R6, R7 fourth-two different groups. In addition those groups have synchronized moving ability as doubles. (FIG.3). Each transfer and positioning robot (R2, R3, R4, R5, R6, R7, R8, R9) can make 6 axis move that provides positioning of the work parts perfectly. Besides, transfer and positioning robots (R2, R3, R4, R5, R6, R7, R8, and R9) can process work part (10) with using operation tool (T) that was picked up from tool magazine (M).

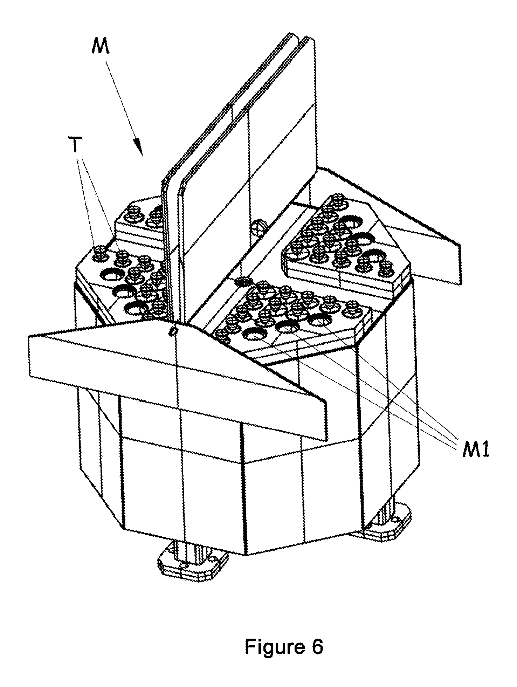

There is a perspective view of the tool magazine (M) at FIG.6 that includes tool socket which is used for fixing different tools. The gripper which is on robot's six axes can process work parts with taking operation tool (T) in the tool socket (M1) by using program that was loaded control panel.

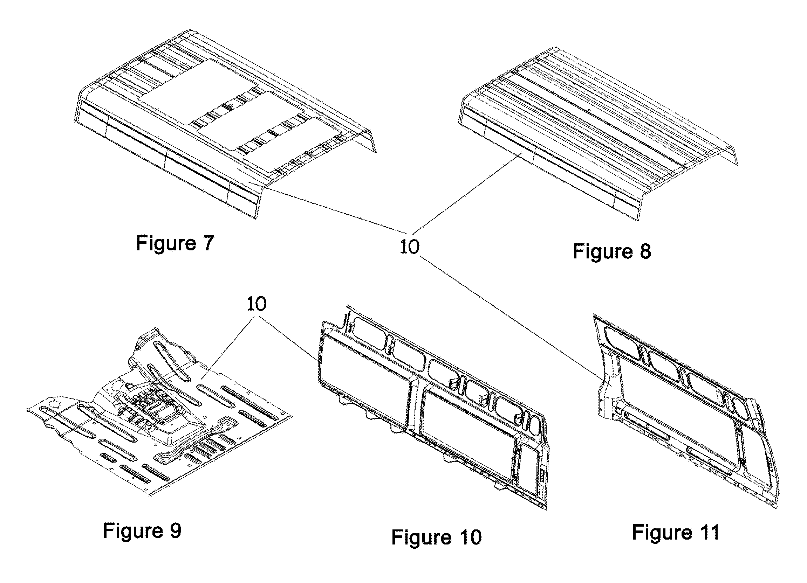

FIG 7,8,9,10 and 11 is the perspective views of the processed work parts (10) example by robotic laser, plasma, water jet, milling machine etc. parts processing system (1). Work parts (10) can be processed by using robotic laser, plasma, water jet, milling machine etc. parts processing system (1).

## Claims

1. Robotic laser, plasma, water jet, milling machine etc. parts processing system (1) wherein between 3 to 13 axis moves processing robot (R1) that moves on the servo motor moving mechanism (S-Slider) and connected with operation tool (L) on the tip is used to process the work part (10) **characterized in that,**
It comprises at least two between 3 to 13 axis moves transferring and positioning robots (R2,R3,R4,R5,R6,R7,R8,R9), that can coordinate the work parts (10) position for suitable position of processing (R1) with using holder (V).

2. Robotic laser, plasma, water jet, milling machine etc. part processing system (1) according to claim 1, **characterized in that** holder (V) that likes sucker is connected to the end sections of each transferring and positioning robots (R2,R3,R4,R5,R6,R7,R8,R9).

3. Robotic laser, plasma, water jet, milling machine etc. part processing system (1) according to Claim 1, **characterized in that** at least one gripper (G) is connected to the end sections of each transferring and positioning robot (R2,R3,R4,R5,R6,R7,R8,R9).

4. Robotic laser, plasma, water jet, milling machine etc. part processing system (1) according to claim 1, **characterized in that** gripper (G) and holder (V) is stabilized to a connection component (P) placed on each transferring and positioning robot's (R2,R3,R4,R5,R6,R7,R8,R9).

5. Robotic laser, plasma, water jet, milling machine etc. part processing system (1) according to claim 1, **characterized in that** each of the transferring and positioning robots (R2,R3,R4,R5,R6,R7,R8,R9) can take processing tool (T) from tool magazine (M) by using gripper (G).

6. Robotic laser, plasma, water jet, milling machine etc. part processing system (1) according to claim 1, **characterized in that** operation tools (T) are settled to the tool sockets (M1) formed on the tool magazines (M).

7. Robotic laser, plasma, water jet, milling machine etc. part processing system (1) according to claim 1, **characterized in that** each transferring and positioning robot (R2,R3,R4,R5,R6,R7,R8,R9) can work individually or each transferring and positioning robot can move in synchronized mode such as in two each, three each, four each, five each, six each, seven each and eight each (for example, R3,R4,R8,R9 and R2,R5,R6,R7 which are in four each group).

8. Robotic laser, plasma, water jet, milling machine etc. part processing system (1) according to claim 1, **characterized in that** all system (1) is settled in a cabin (2) to protect human health from gas, ray, parts piece that occurs during work parts (10) processing.

9. Robotic laser, plasma, water jet, milling machine etc. part processing system (1) according to claim 1, **characterized in that** cabin (2) contains front left-right doors (3,4) where the work part's (10) setting can be done.

10. Robotic laser, plasma, water jet, milling machine etc. part processing system (1) according to claim 1, **characterized in that** it comprises an investigation monitor (6) out of the cabin (2) that has a LCD screen to watch the processing in the cabin (2).

11. Robotic laser, plasma, water jet, milling machine etc. part processing system (1) according to claim 1 **characterized in that** there is a movable camera (7) in the cabin (2) to watch and intervention to the processing and it is controlled form investigation monitor's (6) control panel.

12. Robotic laser, plasma, water jet, milling machine etc. part processing system (1) according to claim 1, **characterized in that** there is a gas outlet pipe (9) on the cabin (2) upper side where destructive gas can be evacuated.

13. Robotic laser, plasma, water jet, milling machine etc. part processing system (1) according to claim 1, **characterized in that** it comprises a control panel (5) that was installed processing control program is used by operator (8) to control the processing robot (R1) and transferring and positioning robots (R2,R3,R4,R5,R6,R7,R8,R9) .

14. Robotic laser, plasma, water jet, milling machine etc. part processing system (1) according to claim 1, **characterized in that** cabin's ceiling (2) is movable.
